# FASCICULE DE BREVET EUROPEEN

(11) **EP 3 569 677 B1**
(45) Date de publication et mention de la délivrance du brevet: **01.02.2023**
(21) Numéro de dépôt: 19169677.2
(22) Date de dépôt: 16.04.2019
(51) Int. Cl.: C10G 75/00, B01J 19/00

(54) **DISPOSITIF LIMITATEUR DE VORTEX ET DE DEPOTS SOLIDES**
VORRICHTUNG ZUR BEGRENZUNG VON WIRBELN UND FESTSTOFFABLAGERUNGEN
LIMITER DEVICE FOR VORTICES AND SOLID DEPOSITS

(30) Priorité: 17.05.2018 FR 1854124
(43) Date de publication de la demande: 20.11.2019
(73) Titulaire: IFP Energies nouvelles, 92852 Rueil-Malmaison Cedex (FR)
(72) Inventeur: Amblard, Benjamin, 69007 LYON (FR); Marques, Joao, 38670 CHASSE SUR RHONE (FR); Le Coz, Jean-François, 78100 SAINT GERMAIN EN LAYE (FR)

(56) Documents cités:
- US-A- 4 276 262
- US-A- 4 534 851
- US-A1- 2006 047 163

## Description

### Domaine technique de l'invention

L'invention concerne le domaine de la réduction des dépôts de sédiments ou de molécules instables ou insolubles dans les équipements de séparation et de distillation préférentiellement à fond conique, qui sont mis en oeuvre en aval des procédés de raffinage traitant des produits lourds ou encrassants. L'invention s'applique de façon non exhaustive aux procédés produisant des liquides susceptibles d'encrasser les équipements, comme la viscoréduction, l'hydrocraquage en lit bouillonnant, le craquage catalytique, la cokéfaction retardée en raffinage de produits pétroliers ainsi que les procédés de liquéfaction de charbon et de traitement de biomasse.

### Art antérieur

La réduction des dépôts encrassant les équipements est une problématique majeure dans les unités de traitement ou conversion des charges hydrocarbonées, notamment pour les charges lourdes. En effet, l'encrassement des équipements impose l'arrêt de l'unité et son démontage pour effectuer le nettoyage. Dans les unités de conversion de charges hydrocarbonées en lit bouillonnant, notamment, l'encrassement des parois et du fond des équipements de séparation peut être dû à des particules de nature asphalténique qui floculent pour former des dépôts solides, des molécules qui s'adsorbent à la paroi, des particules de coke, des fines de catalyseurs, des sulfures métalliques à base de nickel, fer et/ou vanadium ou plus généralement tout solide contenu dans la charge hydrocarbonée traitée.

La demande de brevet US4534851A décrit une méthode d'introduction d'une charge liquide hydrocarbonée dans une conduite de transfert vers une zone réactionnelle, comprenant une injection de vapeur et de la charge hydrocarbonée en écoulement ascendant avec des flux concentriques séparés, le flux de charge hydrocarbonée étant le flux interne et le flux de vapeur étant le flux circonférentiel, et la direction d'une partie de la vapeur vers la paroi interne de ladite conduite de transfert, tandis que le reste de la vapeur et de la charge hydrocarbonée sont évacués de la zone dans une direction parallèle à l'axe longitudinal.

La demande de brevet US2010012666A décrit une géométrie particulière de brise vortex ou déflecteur anti-tourbillon comprenant une surface solide fixée à une base par des supports solides espacés, ladite base étant fixée sur une surface interne de ladite paroi adjacente à ladite sortie, ledit déflecteur anti-tourbillon étant adapté pour diriger le fluide initialement à distance de ladite sortie et ensuite à travers ladite sortie, minimisant ou empêchant ainsi la formation des tourbillons au niveau de ladite sortie.

Le brevet EP 1 086 734 B1 décrit un système de séparation gaz/liquide intervenant dans un procédé de conversion d'hydrocarbures en lit bouillonnant, avec un appareil limitant la formation de vortex liquide, composé de pales adhérentes aux parois disposées à pas angulaire constant permettant de dissiper la quantité de mouvements angulaires, ces pales étant au nombre de 2 à 8, la hauteur de ces pales étant comprise entre la hauteur maximum du liquide et la partie basse du séparateur primaire.

US4276262 et US2006/0047163 divulguent des brises vortex dans une partie tronconique d'un dispositif.

L'art antérieur ne décrit pas de dispositif comprenant une géométrie de brise vortex permettant de limiter les phénomènes de dépôts de solides dans les équipements avec fond conique en présence d'un mélange liquide solide. Les dispositifs brise-vortex classiques ne permettent en effet pas de réduire la vitesse moyenne liquide tout en minimisant les zones de stagnation des solides.

De manière inattendue, la Demanderesse a découvert que la mise en place d'une géométrie particulière de brise vortex dans les équipements à fond conique permet de limiter les phénomènes de dépôts de solide tout en réduisant la vitesse moyenne liquide dans les équipements avec fond conique en présence d'un mélange liquide solide.

### Résumé de l'invention

L'invention concerne un dispositif pour l'écoulement descendant d'un liquide hydrocarboné (3) contenant des particules solides en fond d'un équipement comprenant une partie supérieure cylindrique (1) de diamètre D1, une partie inférieure tronconique (2) de hauteur H et d'angle d'inclinaison α compris entre 5° et 85° par rapport à l'axe vertical (z) de ladite partie supérieure cylindrique, une conduite de sortie (5) de diamètre D2, qui comprend un système limitateur de vortex (4) ou brise-vortex comprenant au moins une lame plate (13) disposée(s) de manière coaxiale à ladite conduite de sortie, avec une symétrie d'axe vertical z, comprenant :
- une partie supérieure trapézoïdale de hauteur (a) et d'angle d'inclinaison β par rapport à l'axe vertical (z) qui se trouve dans la partie tronconique (2) de la colonne, β étant strictement supérieur à 0 et inférieur ou égal à α ;
- et une partie inférieure rectangulaire de hauteur (b+c) et de largeur sensiblement égale à D2,
   ladite lame étant évidée centralement de manière symétrique par rapport à l'axe vertical sur une partie de sa largeur et sur une partie de sa hauteur au moins égale à a.

De préférence, ladite lame est évidée à la fois dans la partie supérieure trapézoïdale sur une hauteur a et dans la partie inférieure rectangulaire sur une hauteur b.

La hauteur (a) de la partie supérieure trapézoïdale de la lame peut être comprise entre 0 et 10^{∗} D2, de manière préférée entre 0,5^{∗} D2 et 5^{∗} D2, de manière très préférée entre 0,5^{∗}D2 et 2^{∗}D2.

La hauteur (b) correspondant à la partie évidée de la partie inférieure rectangulaire de la lame peut être comprise entre 0 et 4^{∗}D2, de manière préférée entre 0 et 2*D2 et de manière très préférée entre 0,1^{∗}D2 et D2.

La hauteur (c) correspondant à la partie inférieure rectangulaire de la lame non évidée est inférieure à 4^{∗}D2, de manière préférée inférieure à 2^{∗}D2 et de manière très préférée inférieure ou égale à D2.

Avantageusement, ledit brise-vortex comprend au moins deux lames, chaque lame étant séparée de la suivante par un angle δ, de préférence 2 à 8 lames, de manière très préférée 2 lames.

De préférence, chacune des lames est évidée par une ouverture centrale rectangulaire de largeur (d), et de longueur supérieure à (a), symétrique par rapport à l'axe z, insérée au centre de ladite lame.

Avantageusement, le rapport entre le diamètre D1 de la partie cylindrique et le diamètre D2 de la conduite de sortie en fond de la partie tronconique (D1/D2) est compris entre 1,1 et 1000, de préférence entre 2 et 500 et de manière préférée entre 3 et 100.

Avantageusement, l'angle α est compris entre 10° et 70°, de préférence entre 15° et 60° et de manière très préférée entre 30° et 50°.

De préférence, l'angle β est égal à α.

Avantageusement, le diamètre D1 est compris entre 0,1 m et 30 m, de préférence entre 0,5 m et 20 m, et de manière très préférée entre 1 m et 10 m.

Dans un mode de réalisation, le dispositif comprend en outre :
- au moins une injection (8) de liquide recyclé et/ou d'appoint dans la partie tronconique (2) de l'équipement ;
- au moins une injection (9) de liquide recyclé et/ou d'appoint dans la partie cylindrique (1) de l'équipement ;
la ou lesdites injections (8) situées dans ladite partie tronconique étant inclinées par rapport à la paroi de la partie inférieure tronconique d'un angle β1 dans le plan vertical (xz) et d'un angle β2 dans le plan horizontal (xy) ; la ou lesdites injections (9) situées dans ladite partie cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 90° et 270°.

Le dispositif peut comprendre une conduite de recyclage (7) d'une partie du liquide sortant de ladite conduite de sortie (5), ladite conduite de recyclage (7) alimentant en liquide recyclé au moins une desdites injections (8) ou (9).

Le dispositif peut comprendre une conduite d'appoint (12) pour alimenter en liquide d'appoint au moins une desdites injections (8) ou (9).

De préférence, lesdites injections sont réparties par couches horizontales dans la partie tronconique et par couches horizontales dans la partie cylindrique respectivement.

De préférence, les angles β1 et θ1 sont compris entre 10° et 150°, de manière très préférée entre 15° et 120°, de manière plus préférée entre 15° et 90°,et de manière encore plus préférée entre 20° et 60°, et les angles β2 et θ2 sont compris entre 90° et 180°, de manière préférée égaux à 90°.

La hauteur entre deux couches horizontales est avantageusement comprise entre 0,01 m et 10 m, de préférence entre 0,05 m et 5 m et de manière très préférée entre 0,1 m et 1 m.

Le nombre d'injections N par couche peut être compris entre 1 et 30, de préférence entre 2 et 20, de manière très préférée entre 2 et 10, de manière encore plus préférée entre 2 et 6, lesdites injections au sein d'une même couche étant espacées d'un angle égal à 360/N où N désigne le nombre d'injections par couche.

Ledit équipement peut être un moyen de séparation gaz/liquide permettant de traiter des charges hydrocarbonées.

L'invention concerne également un procédé de conversion de charges hydrocarbonées mettant en oeuvre ledit dispositif.

La vitesse du liquide V injecté dans lesdites injections du mode de réalisation décrit ci-dessus est avantageusement comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹.

Le taux d'injection de liquide recyclé et/ou d'appoint par rapport au liquide hydrocarboné circulant dans l'équipement peut être compris entre 1% et 400%, de préférence entre 5% et 100%, de manière très préférée entre 10% et 60% et de manière encore plus préférée entre 20 et 50%.

Ledit procédé peut mettre en oeuvre une étape d'hydroconversion en lit bouillonnant pour des charges contenant des fractions d'hydrocarbures dont au moins 50 % poids ont une température d'ébullition supérieure à 300°C.

### Description détaillée de l'invention

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
**Figure 1** **:** La figure 1 représente le schéma de principe du dispositif comprenant le système limitateur de vortex ou brise-vortex selon l'invention.
**Figure 2** **:** La figure 2 illustre la mise en oeuvre du dispositif dans le mode de réalisation comprenant des injections de liquide hydrocarboné recyclé et/ou d'appoint à l'intérieur des parties cylindrique et tronconique de l'équipement à fond conique.
**Figure 3** **:** La Figure 3 (3A : vue isométrique, 3B : vue de haut) présente le système limitateur de vortex pour écoulements de liquides contenant des particules solides utilisé dans le dispositif selon l'invention.
**Figure 4** **:** La figure 4 (4A et 4B) est une vue en coupe détaillée d'une lame du système limitateur de vortex utilisé dans le dispositif selon l'invention. La figure 4A représente un mode de réalisation dans lequel la lame est évidée sur une partie de sa longueur, la figure 4B représente un mode de réalisation dans lequel la lame est évidée sur toute sa longueur (c=0).
**Figure 5** **:** La Figure 5 illustre l'exemple en représentant les zones stagnantes pour trois configurations d'équipement à fond conique : a) dispositif sans brise-vortex (comparatif), b) dispositif avec brise-vortex classique (comparatif), c) dispositif avec brise-vortex selon l'invention (conforme).
**Figure 6** **:** La figure 6 illustre l'exemple en représentant les vecteurs-vitesse liquide dans le plan (xy) dans la conduite (5) pour les trois cas a), b) (comparatifs) et c) (conforme).

### Description détaillée de l'invention

De manière générale, l'invention s'applique à tout équipement dans lequel circule un liquide hydrocarboné avec possibilité de stagnation et accumulation de particules solides en fond d'équipement. L'écoulement dans le dispositif se fait de manière descendante. Plus particulièrement, le dispositif selon l'invention est situé dans la partie inférieure d'une colonne de distillation atmosphérique ou sous vide, ballon de séparation ou tout autre moyen de séparation gaz/liquide permettant de traiter des charges hydrocarbonées.

Le dispositif selon l'invention permet de limiter les dépôts de solides tout en réduisant la vitesse tangentielle du liquide, dans les équipements avec fond conique dans lesquels s'écoule de manière descendante un mélange liquide-solide, en mettant en oeuvre un système limitateur de vortex ou brise-vortex de géométrie particulière.

Le dispositif selon l'invention est mis en oeuvre dans un équipement à fond conique, c'est-à-dire comprenant une partie supérieure cylindrique et une partie inférieure tronconique où un liquide hydrocarboné encrassant (c'est-à-dire un liquide contenant des particules solides ou des composés susceptibles de floculer ou de s'adsorber à la paroi) s'écoule de manière descendante à partir du haut de l'équipement, et sort à travers une conduite de sortie. La forme tronconique est bien connue de l'homme du métier pour minimiser le dépôt dans le fond en facilitant le drainage des solides par gravité vers la conduite de sortie.

La charge entrant dans le dispositif peut contenir tout type de composés issus d'un effluent d'un procédé d'hydroconversion, par exemple issu d'une unité lit bouillonnant H-OIL ^{™}, mais également tout type de composés issus d'un procédé d'hydroconversion en slurry, d'un procédé d'hydrotraitement en lit fixe, lit mobile, lit fluidisé, effluent de craquage catalytique (FCC ou Fluid Catalytic Cracking selon la terminologie anglo-saxonne), effluents des procédés de conversion thermique comme le coking, le visbreaking, et tout autre procédé de séparation comme par exemple le désasphaltage au solvant.

Les particules solides peuvent être des asphaltènes précipités, des fines de catalyseurs supportés ou non supportés (usuellement de diamètre inférieur à 500 microns) ou des particules de coke, des sulfures de métaux tels que nickel, vanadium, fer, molybdène.

### Figure 1 :

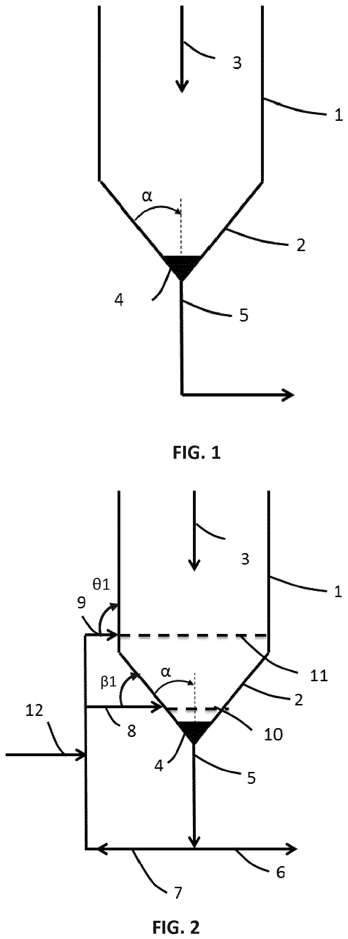

La Figure 1 présente le schéma de principe de l'invention.

L'invention concerne un dispositif pour l'écoulement descendant d'un liquide hydrocarboné contenant des particules solides (3) en fond d'un équipement, qui peut être par exemple une colonne de distillation ou un séparateur ou un ballon tampon. L'équipement possède une partie supérieure cylindrique (1) de diamètre D1, une partie inférieure tronconique (2), une conduite de sortie (5) située en bas de l'équipement, par laquelle le liquide hydrocarboné sort, de diamètre D2. La partie tronconique (2) (aussi appelée fond conique) a un angle d'inclinaison a, par rapport à la paroi verticale de la partie cylindrique, matérialisée par l'axe z. L'invention met en oeuvre une géométrie particulière de brise vortex (4) implémentée en partie en fond de la partie tronconique (2) et en partie dans la conduite de sortie (5).

### Figure 2 :

La figure 2 présente un schéma de principe d'un mode de réalisation, comprenant des injections latérales de liquide.

Dans un mode de réalisation, le dispositif peut mettre en oeuvre en outre des injections latérales de liquide recyclé et/ou d'appoint.

Dans l'ensemble du texte, on désigne par « injection » tout moyen connu de l'homme du métier permettant d'injecter du liquide depuis la paroi de l'équipement vers l'intérieur, ledit moyen étant alimenté par au moins une conduite de transport de liquide.

Afin de réduire encore la formation des dépôts en paroi et dans le fond de l'équipement, le dispositif peut ainsi comprendre des injections latérales de liquide recyclé et/ou d'appoint : injections dans la partie tronconique (8) et injections dans la partie cylindrique (9). Ces injections peuvent être réparties à la paroi selon des couches horizontales (10) dans la partie tronconique et selon des couches horizontales (11) dans la partie cylindrique. Le flux liquide sortant est évacué de l'équipement par une conduite d'évacuation (6).

Dans une première variante, une conduite d'appoint de liquide (qui peut être un liquide fluxant) (12) alimente les injections latérales (8) et (9) situées dans la partie tronconique et dans la partie cylindrique, afin de réduire les zones stagnantes dans l'équipement et de limiter les dépôts de particules solides sur les parois. Toute coupe de point d'ébullition supérieur ou égal au point d'ébullition du liquide hydrocarboné (3) alimentant l'équipement, par exemple effluent de craquage catalytique (Heavy Cycle Oil), LCO (Light Cycle Oil), ou toute autre coupe VGO (distillat sous vide), AR (résidu atmosphérique), VR (résidu sous vide), DAO (huile déasphaltée), extrait aromatique, peut convenir comme liquide d'appoint. Selon ce mode de réalisation le débit de liquide sortant par la conduite d'évacuation (6) est égal à somme du débit de liquide hydrocarboné circulant dans l'équipement (3) et du débit de liquide d'appoint injecté dans la conduite d'appoint (12). Le liquide d'appoint injecté à travers la conduite d'appoint (12) permet de réduire les zones stagnantes en générant une turbulence dans l'équipement afin de limiter les dépôts de particules solides sur les parois. Ledit liquide d'appoint injecté peut également jouer un rôle de fluxant ou posséder un pouvoir solvant vis-à-vis des espèces en limite de solubilité dans la phase liquide lorsque le liquide choisi est une base aromatique.

Selon une autre variante, une partie du liquide hydrocarboné sortant de l'équipement peut être recyclée pour alimenter les injections latérales (8) et (9). Selon ce mode de réalisation le débit de liquide sortant par la conduite d'évacuation (6) est égal au débit du liquide circulant dans l'équipement (3). Le liquide recyclé à travers la conduite de recyclage (7) permet de réduire les zones stagnantes dans l'équipement en générant une turbulence afin de limiter les dépôts de particules solides sur les parois.

Selon une dernière variante, le liquide injecté dans les injections latérales (8) et (9) peut provenir à la fois de la conduite de recyclage (7) et de la conduite d'appoint de liquide (12). Selon ce mode de réalisation, le débit de liquide sortant par la conduite d'évacuation (6) est égal à la somme du débit de liquide hydrocarboné circulant dans l'équipement, dit liquide encrassant (3), et du débit de liquide d'appoint injecté dans la conduite d'appoint (12). Le liquide injecté à travers la conduite d'appoint (12) et à travers la conduite de recyclage (7) permet de réduire les zones stagnantes en générant une turbulence dans l'équipement afin de limiter les dépôts de particules solides sur les parois et peut également jouer le rôle de fluxant évoqué précédemment.

Le liquide injecté par les injections latérales (8) et (9) peut donc être du liquide recyclé depuis l'équipement et/ou du liquide d'appoint, c'est-à-dire un liquide provenant de l'extérieur de l'équipement.

On définit le taux d'injection du liquide injecté par les injections latérales (8) et (9) comme étant le rapport entre la somme du débit de liquide dans la conduite de recyclage (7) et du débit de liquide dans la conduite d'appoint (12) sur le débit de liquide hydrocarboné circulant dans l'équipement ou liquide encrassant (3).

Deux types d'injection de liquide (d'appoint ou recyclé) sont définis :
➢ Les injections (8) dans la partie tronconique (2) de l'équipement.
➢ Les injections (9) dans la partie cylindrique (1) de l'équipement.

Les injections (8) situées dans la partie tronconique (2) sont inclinées par rapport à la paroi du fond conique d'un angle β1 dans le plan vertical (xz) et d'un angle β2 dans le plan horizontal (xy), x désigne l'axe horizontal, z désigne l'axe vertical de la partie cylindrique perpendiculaire au plan horizontal (xy).

Les injections (9) situées dans la partie cylindrique (1) sont inclinées par rapport à la paroi du corps cylindrique d'un angle θ1 dans le plan vertical (xz) et d'un angle θ2 dans le plan horizontal (xy).

Les injections sont avantageusement orientées dans le même sens de rotation dans le plan horizontal (xy) et situées avantageusement dans la partie liquide du fond de colonne.

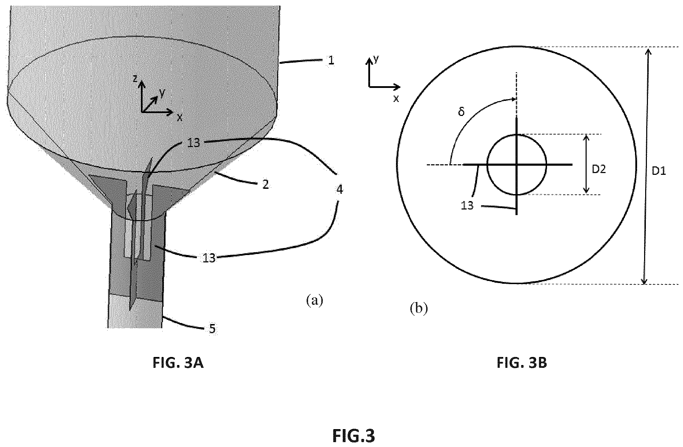

La mise en place des injections à la paroi de l'équipement peut être effectuée suivant des couches horizontales (11) dans le plan (xy) pour les injections (9) dans la partie cylindrique (1) et suivant des couches horizontales (10) pour les injections (8) dans la partie tronconique (2). Chaque couche d'injections (10) dans la partie tronconique (2) et (11) dans la partie cylindrique (1) comprend respectivement un nombre N d'injections (8) ou (9) localisées à la même hauteur sur l'axe (z). Sur la Figure 3, N est égal à 1. Chaque couche est séparée par une hauteur Hₕ. A l'intérieur d'une couche, chaque injection est séparée de la suivante par un angle égal à 360/N dans le plan (xy). Une couche d'injections peut être décalée angulairement par rapport à une autre couche d'injections dans le plan (xy).

Le nombre de couches dans chacune des parties tronconique ou cylindrique est avantageusement compris entre 1 et 20, de préférence entre 1 et 10 et de manière préférée entre 1 et 6.

La vitesse du liquide V injecté dans les conduites d'injections latérales (8) et (9) est comprise avantageusement entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹. De manière préférée, les diamètres des conduites d'injection sont dimensionnés en fonction du débit de liquide à injecter afin d'obtenir les vitesses d'injection souhaitées.

Le débit de liquide recyclé par la conduite de recyclage (7) plus le débit de liquide injecté par la conduite (12) sur le débit de liquide hydrocarboné (3) circulant dans l'équipement est avantageusement compris entre 1% et 400%, de préférence entre 5% et 100%, de manière très préférée entre 10% et 60% et de manière encore plus préférée entre 20 et 50%.

Les angles β1 et θ1 sont compris entre 5° et 175° par rapport respectivement à la paroi de la partie tronconique et à la paroi de la partie cylindrique, de préférence entre 10° et 150°, de manière très préférée entre 15° et 120° et de manière plus préférée entre 15° et 90°et de manière encore plus préférée entre 20° et 60°.

Les angles β2 et θ2 sont compris entre 90° et 270° par rapport au diamètre selon l'axe y de la section cylindrique, et de manière préférée entre 90° et 180°. De manière très préférée, les angles β2 et θ2 sont égaux à 90°.

Le nombre d'injections N à la paroi de l'équipement, dans chaque couche horizontale (11) dans la partie cylindrique (1) et dans chaque couche horizontale (10) dans la partie tronconique (2) est compris entre 1 et 30, de préférence entre 2 et 20, de manière très préférée entre 2 et 10, de manière plus préférée entre 2 et 6. Chaque couche, que ce soit au sein d'une même partie ou dans les deux parties, peut avoir un nombre d'injections N différent.

La hauteur entre deux couches horizontales est avantageusement comprise entre 0,01 m et 10 m, de préférence entre 0,05 m et 5 m et de manière très préférée entre 0,1 m et 1 m.

L'angle séparant les injections dans la circonférence d'une même couche est compris entre 0° et 180°, de préférence entre 5° et 120°, de manière très préférée entre 10° et 90°. De manière avantageuse, cet angle est égal à 360/N où N désigne le nombre d'injections par couche.

Le décalage angulaire d'une couche par rapport à l'autre peut être compris entre 0° et 180°, de préférence entre 5° et 120°, de manière très préférée entre 10° et 90°.

### Figure 3 :

La figure 3 présente une géométrie détaillée du brise vortex (4).

La figure 3A présente une vue isométrique et la figure 3B une vue de dessus du système limitateur de vortex ou brise vortex selon l'invention (4). Dans l'exemple de la figure 3, le brise vortex (4) est composé de deux lames (13), qui forment ainsi un système comprenant quatre pales fixées à la paroi. La disposition des lames est symétrique par rapport à l'axe de la colonne et chaque lame est séparée par un angle δ.

La figure 3A représente le dispositif pour l'écoulement descendant d'un liquide hydrocarboné contenant des particules solides, notamment des matières en suspension, en fond d'un équipement comprenant une partie supérieure cylindrique (1) de diamètre D1, une partie inférieure tronconique (2) d'angle d'inclinaison α compris entre 5° et 85°par rapport à l'axe vertical (z) de ladite partie supérieure cylindrique, une conduite de sortie (5) de diamètre D2, qui comprend un système limitateur de vortex, dit brise-vortex (4), comprenant au moins une lame plate (13) disposée(s) de manière coaxiale avec la conduite de sortie, avec une symétrie d'axe vertical z, ladite lame comprenant une partie supérieure trapézoïdale, qui se trouve dans la partie tronconique (2) de la colonne et une partie inférieure rectangulaire, et ladite lame étant évidée de manière symétrique par rapport à l'axe vertical z, en son centre, sur une partie de sa largeur et sur une partie de sa hauteur au moins égale à la hauteur de la partie trapézoïdale. Ladite lame est avantageusement fixée, par exemple par soudure ou collage, à la paroi sur au moins une partie de ses bords externes.

De préférence, comme indiqué sur la figure 3A, ladite lame est évidée à la fois dans la partie supérieure trapézoïdale sur une hauteur a et dans la partie inférieure rectangulaire sur au moins une hauteur b.

De manière très préférée, ladite lame est évidée sur toute sa longueur, et forme ainsi deux pales fixées au moins en partie à la paroi de l'équipement.

De préférence, l'évidement dans la partie trapézoïdale de la lame est de même forme que et aligné avec l'évidement dans la partie rectangulaire de la lame.

Dans un mode de réalisation, comme indiqué sur la figure 3A, chacune des lames est évidée par une ouverture centrale rectangulaire de largeur (d), et de longueur supérieure à a, symétrique par rapport à l'axe z, insérée au centre de ladite lame.

De préférence, le système comprend au moins deux lames, de préférence 2 à 8, et de manière très préférée 2, comme indiqué sur les figures 3A et 3B, disposées à pas angulaire constant permettant de dissiper la quantité de mouvements angulaires. Chaque lame est ainsi séparée de la suivante par un angle δ (figure 3B). De manière très préférée, lorsque le nombre de lames est égal à 2, les lames sont disposées orthogonalement (δ=90°).

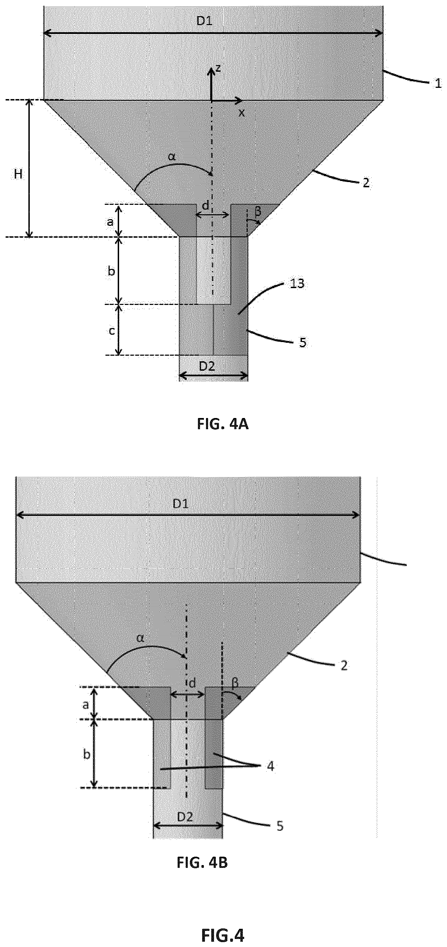

La géométrie détaillée des lames (13) est présentée dans la figure 4.

### Figure 4 :

Les lames (13) sont installées dans un fond de colonne avec une partie cylindrique (1) de diamètre D1 et une partie tronconique (2) d'angle α débouchant sur une conduite de sortie (5) de diamètre D2. La hauteur H de la partie tronconique (2) est dépendante des valeurs choisies pour D1, D2 et α.

La géométrie des lames (13) est symétrique par rapport à l'axe z. Sur la figure 4A, la lame comprend trois parties distinctes :
➢ Une première partie trapézoïdale de hauteur (a) qui se trouve dans la partie tronconique (2) de la colonne. La hauteur (a) est comprise entre le bas de la partie tronconique (2) et la partie supérieure de la lame (13). Dans cette partie, la lame (13) s'élargit à l'intérieur de la partie tronconique (2) avec un angle β. Sur la figure 4, une ouverture rectangulaire de largeur (d), symétrique par rapport à l'axe z, est insérée au centre de la lame (13).
➢ Une deuxième partie de hauteur (b) au sein de la conduite de sortie (5). La hauteur (b) est comprise entre le bas de la partie conique (2) et le début de de la troisième partie de hauteur (c). Dans cette partie de hauteur (b), l'ouverture de largeur (d) est présente et alignée avec l'ouverture de la première partie de hauteur (a).
➢ Une troisième partie de hauteur (c) qui se trouve au sein de la conduite (5). La hauteur (c) est comprise entre la fin de la deuxième partie de hauteur (b) et la partie inférieure de la lame (13). Dans cette troisième partie, la lame est pleine, c'est-à-dire qu'aucune ouverture au centre de la lame n'est présente.

Le diamètre D1 de la partie cylindrique (1) de l'équipement permettant l'écoulement du liquide contenant des particules solides est avantageusement compris entre 0,1 m et 30 m, de préférence entre 0,5 m et 20 m, et de manière très préférée entre 1 m et 10 m.

Le rapport entre le diamètre D1 de la partie cylindrique (1) et le diamètre D2 de la conduite de sortie (5) en fond de la partie tronconique (D1/D2) est avantageusement compris entre 1,1 et 1000, de préférence entre 2 et 500 et de manière préférée entre 3 et 100.

L'angle α est l'angle d'inclinaison de la partie tronconique par rapport à la paroi verticale (d'axe z) de la partie cylindrique et est compris entre 5° et 85°, de préférence entre 10 et 70°, de manière très préférée entre 15 et 60° et de manière encore plus préférée entre 30 et 50°.

Le nombre de lames (13) est avantageusement compris entre 1 et 8, de manière préférée entre 2 et 8, et de manière très préférée égal à 2.

La hauteur (a) est avantageusement comprise entre 0 et 10^{∗} D2, et de manière préférée entre 0,5^{∗} D2 et 5^{∗} D2, de manière très préférée entre 0,5^{∗}D2 et 2^{∗}D2.

La hauteur (b) correspondant à la partie inférieure rectangulaire de la lame qui est évidée est avantageusement comprise entre 0 et 4^{∗}D2, de manière préférée entre 0 et 2^{∗}D2 et de manière très préférée entre 0,1^{∗}D2 et D2.

La hauteur (c) correspondant à la partie inférieure rectangulaire de la lame qui est pleine (donc non évidée) est avantageusement comprise entre 0 et 4^{∗}D2, de manière préférée entre 0 et 2^{∗}D2 et de manière très préférée entre 0 et D2.

De préférence, comme représenté sur la figure 4B, la lame ne comprend pas de partie de hauteur (c) et est donc évidée centralement sur toute sa hauteur.

L'angle β d'inclinaison de la lame plate (13) dans sa partie trapézoïdale, qui correspond à l'élargissement de la lame (13) dans la partie tronconique (2) est strictement supérieur à 0 et inférieur ou égal à α, et de manière avantageuse égal à α.

De manière similaire, le dispositif selon l'invention peut s'adapter aux équipements à fond hémisphérique ou elliptique ou toute autre forme de révolution en choisissant un profil adapté à la forme locale du fond autour de la conduite de sortie, notamment un angle adapté pour la partie supérieure de la lame.

Le système limitateur de vortex est avantageusement au moins en partie fixé à la paroi de la conduite de diamètre D2 par soudure, collage ou tout autre moyen.

### Avantages de l'invention

La partie de hauteur (a) du système limitateur de vortex dans la partie tronconique (2) permet de limiter les zones stagnantes et donc le dépôt de solide dans le fond de l'équipement.

L'évidement central de la lame permet au solide présent dans le centre de la colonne de s'écouler vers les zones de haute vitesse de la conduite (5) sans possibilité que ce solide s'accroche à une paroi (comme c'est le cas avec des brise vortex classique).

### Exemples

Des simulations par CFD (Computational Fluid Dynamics) de l'écoulement liquide dans une colonne de séparation gaz/liquide ont été effectuées avec le logiciel Fluent qui utilise une approche Eulérienne pour la phase liquide (http://www.afs.enea.it/proiect/neptunius/docs/fluent/html/th/node319.htm#sec-multiphase-eulerian). Dans ces simulations, il est fait l'hypothèse que les particules de solides n'influent pas sur l'écoulement liquide. Cette hypothèse est notamment justifiée pour des écoulements dit dilués avec des concentrations solides faibles.

Les vitesses de liquide proches à la paroi du fond tronconique sont utilisées comme critère pour définir des zones favorables aux dépôts, dites zones de stagnations. Toutes les zones où la vitesse liquide est supérieure à 10 cm/s sont considérées comme « zones non stagnantes » et inversement toutes les zones où les vitesses de liquide sont inférieures à 10 cm/s sont considérées comme « zones stagnantes » (zones où les particules de solide peuvent s'accumuler facilement).

Le tableau 1 présente les conditions de simulation ainsi que les dimensions de la colonne de séparation gaz/liquide, pour le mode de réalisation où les injections latérales de liquide sont présentes. Trois simulations ont été effectuées :
➢ Première simulation : dispositif sans brise vortex
➢ Deuxième simulation : dispositif avec brise vortex selon l'art antérieur comprenant 2 lames pleines disposées à angle droit uniquement dans la partie tronconique de l'équipement
➢ Troisième simulation : dispositif avec brise vortex selon l'invention

**Tableau 1**

| **Dimensions équipements** | |
|---|---|
| Diamètre D1 (m) | 1,2 |
| Diamètre D2 (m) | 0,25 |
| Angle α | 45° |
| Nombre de couches 7 | 1 |
| Nombre de couches 8 | 1 |
| Nombre d'injections par couche | 2 |
| Angle β1 et θ1 | 0° |
| Angle β2 et θ2 | 90° |

| **Conditions opératoires** | |
|---|---|
| Masse volumique liquide (kg/m³) | 990 |
| Débit liquide net (kg/s) | 9,8 |
| Pourcentage recycle liquide | 30% |

| **Géométrie de brise vortex selon l'art antérieur (comparatif)** | |
|---|---|
| Nombre de lames | 2 |
| δ | 90° |
| a (mm) | 300 |
| b (mm) | 0 |
| c (mm) | 0 |
| d (mm) | 0 |
| β | 45° |

| **Géométrie de brise vortex selon l'invention** | |
|---|---|
| Nombre de lames | 2 |
| δ | 90° |
| a (mm) | 55 |
| b (mm) | 100 |
| c (mm) | 0 |
| d (mm) | 120 |
| β | 45° |

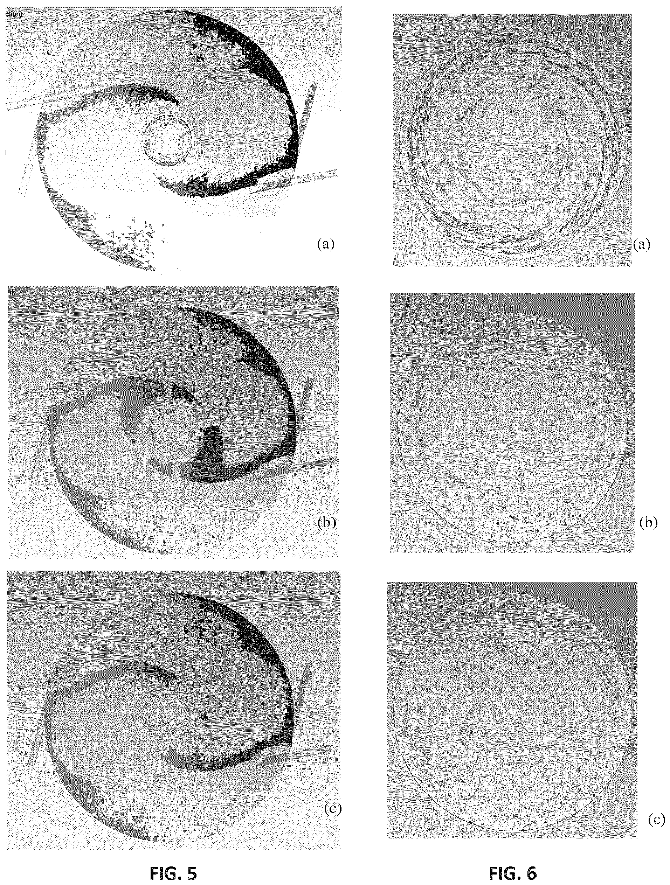

La **figure 5** présente les zones stagnantes pour les trois cas simulés.

La **figure 6** présente les vecteurs vitesses liquide dans le plan (xy) dans la conduite de sortie (5) pour les trois cas simulés.

Dans les cas avec brise vortex (comparatif avec brise-vortex classique et selon l'invention), les vitesses de liquide dans le plan (xy) dans la conduite (5) sont moins importantes que dans le cas comparatif sans brise vortex comme présenté dans le tableau 2. De plus, il n'y a plus d'effet de rotation de liquide avec les brise-vortex.

**Tableau 2**

| | Sans brise vortex | Avec brise vortex comparatif | Avec brise vortex selon invention |
|---|---|---|---|
| Vitesse tangentielle moyenne liquide dans le plan (xy) dans la conduite (5) (cm/s) | 8 | 1 | 1 |

Ensuite, lorsque l'on compare le dispositif avec brise vortex classique et le dispositif avec brise-vortex selon l'invention, les zones stagnantes sont plus importantes dans le cas du brise vortex classique comme montré dans le tableau 3.

**Tableau 2**

| | Sans brise vortex | Avec brise vortex comparatif | Avec brise vortex selon invention |
|---|---|---|---|
| Pourcentage de zone stagnante sur la surface du fond tronconique (2) | 16% | 28% | 16% |

Ainsi, la géométrie proposée dans l'invention permet de casser les effets de vortex tout en minimisant les zones de stagnations, en gardant notamment le bénéfice des injections de liquide en amont de la conduite de sortie. Seul le dispositif selon l'invention permet de réduire la vitesse tangentielle liquide tout en minimisant la stagnation des solides.

## Revendications

1. Dispositif pour l'écoulement descendant d'un liquide hydrocarboné (3) contenant des particules solides en fond d'un équipement comprenant une partie supérieure cylindrique (1) de diamètre D1, une partie inférieure tronconique (2) de hauteur H et d'angle d'inclinaison α compris entre 5° et 85° par rapport à l'axe vertical (z) de ladite partie supérieure cylindrique, une conduite de sortie (5) de diamètre D2, **caractérisé en ce qu'**il comprend un système limitateur de vortex (4) ou brise-vortex comprenant au moins une lame plate (13) disposée(s) de manière coaxiale à ladite conduite de sortie, avec une symétrie d'axe vertical z, comprenant :
- une partie supérieure trapézoïdale de hauteur (a) et d'angle d'inclinaison β par rapport à l'axe vertical (z) qui se trouve dans la partie tronconique (2) de la colonne, β étant strictement supérieur à 0 et inférieur ou égal à α ;
- et une partie inférieure rectangulaire de hauteur (b+c) et de largeur sensiblement égale à D2,
ladite lame étant évidée centralement de manière symétrique par rapport à l'axe vertical sur une partie de sa largeur et sur une partie de sa hauteur au moins égale à a.

2. Dispositif selon la revendication 1 dans lequel ladite lame est évidée à la fois dans la partie supérieure trapézoïdale sur une hauteur a et dans la partie inférieure rectangulaire sur une hauteur b.

3. Dispositif selon l'une des revendications précédentes dans lequel la hauteur (a) de la partie supérieure trapézoïdale de la lame est comprise entre 0 et 10^{∗} D2, de manière préférée entre 0,5^{∗} D2 et 5^{∗} D2, de manière très préférée entre 0,5^{∗}D2 et 2^{∗}D2.

4. Dispositif selon l'une des revendications précédentes dans lequel la hauteur (b) correspondant à la partie évidée de la partie inférieure rectangulaire de la lame est comprise entre 0 et 4^{∗}D2, de manière préférée entre 0 et 2^{∗}D2 et de manière très préférée entre 0,1^{∗}D2 et D2.

5. Dispositif selon l'une des revendications précédentes dans lequel la hauteur (c) correspondant à la partie inférieure rectangulaire de la lame non évidée est inférieure à 4*D2, de manière préférée inférieure à 2*D2 et de manière très préférée inférieure ou égale à D2.

6. Dispositif selon l'une des revendications 1 à 5 dans lequel ledit brise-vortex comprend au moins deux lames, chaque lame étant séparée de la suivante par un angle δ, de préférence 2 à 8 lames, de manière très préférée 2 lames.

7. Dispositif selon l'une des revendications précédentes dans lequel chacune des lames est évidée par une ouverture centrale rectangulaire de largeur (d), et de longueur supérieure à (a), symétrique par rapport à l'axe z, insérée au centre de ladite lame.

8. Dispositif selon l'une des revendications précédentes dans lequel le rapport entre le diamètre D1 de la partie cylindrique et le diamètre D2 de la conduite de sortie en fond de la partie tronconique (D1/D2) est compris entre 1,1 et 1000, de préférence entre 2 et 500 et de manière préférée entre 3 et 100.

9. Dispositif selon l'une des revendications précédentes dans lequel l'angle α est compris entre 10° et 70°, de préférence entre 15° et 60° et de manière très préférée entre 30° et 50°.

10. Dispositif selon l'une des revendications précédentes dans lequel l'angle β est égal à α.

11. Dispositif selon l'une des revendications 1 à 10 dans lequel le diamètre D1 est compris entre 0,1 m et 30 m, de préférence entre 0,5 m et 20 m, et de manière très préférée entre 1 m et 10 m.

12. Dispositif selon l'une des revendications précédentes comprenant en outre :
- au moins une injection (8) de liquide recyclé et/ou d'appoint dans la partie tronconique (2) de l'équipement ;
- au moins une injection (9) de liquide recyclé et/ou d'appoint dans la partie cylindrique (1) de l'équipement ;
la ou lesdites injections (8) situées dans ladite partie tronconique étant inclinées par rapport à la paroi de la partie inférieure tronconique d'un angle β1 dans le plan vertical (xz) et d'un angle β2 dans le plan horizontal (xy) ; la ou lesdites injections (9) situées dans ladite partie cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 90° et 270°.

13. Dispositif selon la revendication 12 comprenant une conduite de recyclage (7) d'une partie du liquide sortant de ladite conduite de sortie (5), ladite conduite de recyclage (7) alimentant en liquide recyclé au moins une desdites injections (8) ou (9).

14. Dispositif selon l'une des revendications 12 ou 13 comprenant une conduite d'appoint (12) pour alimenter en liquide d'appoint au moins une desdites injections (8) ou (9).

15. Dispositif selon l'une des revendications 12 à 14 dans lequel lesdites injections sont réparties par couches horizontales dans la partie tronconique et par couches horizontales dans la partie cylindrique respectivement.

16. Dispositif selon l'une des revendications 12 à 15 dans lequel les angles β1 et θ1 sont compris entre 10° et 150°, de manière très préférée entre 15° et 120°, de manière plus préférée entre 15° et 90°, et de manière encore plus préférée entre 20° et 60°, et les angles β2 et θ2 sont compris entre 90° et 180°, de manière préférée égaux à 90°.

17. Dispositif selon l'une des revendications 12 à 16 dans lequel la hauteur entre deux couches horizontales est comprise entre 0,01 m et 10 m, de préférence entre 0,05 m et 5 m et de manière très préférée entre 0,1 m et 1 m.

18. Dispositif selon l'une des revendications 15 à 17 dans lequel le nombre d'injections N par couche est compris entre 1 et 30, de préférence entre 2 et 20, de manière très préférée entre 2 et 10, de manière encore plus préférée entre 2 et 6, lesdites injections au sein d'une même couche étant espacées d'un angle égal à 360/N où N désigne le nombre d'injections par couche.

19. Dispositif selon l'une des revendications précédentes dans lequel ledit équipement est un moyen de séparation gaz/liquide permettant de traiter des charges hydrocarbonées.

20. Procédé de conversion de charges hydrocarbonées mettant en oeuvre un dispositif selon l'une des revendications 1 à 19.

21. Procédé selon la revendication 20, , dans lequel le dispositif comprend en outre :
- au moins une injection (8) de liquide recyclé et/ou d'appoint dans la partie tronconique (2) de l'équipement,
- au moins une injection (9) de liquide recyclé et/ou d'appoint dans la partie cylindrique (1) de l'équipement,
la ou lesdites injections (8) situées dans ladite partie tronconique étant inclinées par rapport à la paroi de la partie inférieure tronconique d'un angle β1 dans le plan vertical (xz) et d'un angle β2 dans le plan horizontal (xy) ; la ou lesdites injections (9) situées dans ladite partie cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 90° et 270° , et dans lequel
la vitesse du liquide V injecté dans lesdites injections est comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹.

22. Procédé selon la revendication 21 dans lequel le taux d'injection de liquide recyclé et/ou d'appoint par rapport au liquide hydrocarboné circulant dans l'équipement est compris entre 1% et 400%, de préférence entre 5% et 100%, de manière très préférée entre 10% et 60% et de manière encore plus préférée entre 20 et 50%.

23. Procédé selon l'une des revendications 20 à 22 mettant en oeuvre une étape d'hydroconversion en lit bouillonnant pour des charges contenant des fractions d'hydrocarbures dont au moins 50 % poids ont une température d'ébullition supérieure à 300°C.

## Patentansprüche

1. Vorrichtung zur Abwärtsströmung einer Kohlenwasserstoffflüssigkeit (3), die feste Teilchen am Boden einer Einrichtung umfasst, welche einen zylindrischen oberen Abschnitt (1) mit einem Durchmesser D1, einen kegelstumpfförmigen unteren Abschnitt (2) mit einer Höhe H und einem Neigungswinkel α zwischen 5° und 85° in Bezug auf die vertikale Achse (z) des zylindrischen oberen Abschnitts, eine Auslassleitung (5) mit einem Durchmesser D2 umfasst, **dadurch gekennzeichnet, dass** sie ein System (4) zum Begrenzen von Wirbeln oder Brechen von Wirbeln umfasst, das mindestens eine flache Klinge (13) umfasst, die koaxial mit der Auslassleitung mit einer Symmetrie der vertikalen Achse z angeordnet ist (sind), die Folgendes umfasst:
- einen trapezförmigen oberen Abschnitt mit einer Höhe (a) und einem Neigungswinkel β in Bezug auf die vertikale Achse (z), der sich im kegelstumpfförmigen Abschnitt (2) der Säule befindet, wobei β strikt größer als 0 und kleiner als oder gleich α ist;
- und einen rechteckigen unteren Abschnitt mit einer Höhe (b+c) und einer Breite, die im Wesentlichen gleich D2 ist,
wobei die Klinge in einem Teil ihrer Breite und über einen Teil ihrer Höhe, der mindestens gleich a ist, zentral und symmetrisch in Bezug auf die vertikale Achse zurückgesetzt ist.

2. Vorrichtung nach Anspruch 1, wobei die Klinge sowohl im trapezförmigen oberen Abschnitt über eine Höhe h als auch im rechteckigen unteren Abschnitt über eine Höhe b zurückgesetzt ist.

3. Vorrichtung nach einem der vorhergehenden Ansprüche, wobei die Höhe (a) des trapezförmigen oberen Abschnitts der Klinge zwischen 0 und 10*D2, vorzugsweise zwischen 0,5*D2 und 5*D2, außerordentlich bevorzugt zwischen 0,5*D2 und 2*D2, beträgt.

4. Vorrichtung nach einem der vorhergehenden Ansprüche, wobei die Höhe (b), die dem zurückgesetzten Abschnitt des rechteckigen unteren Abschnitts der Klinge entspricht, zwischen 0 und 4*D2, vorzugsweise zwischen 0*D2 und 2*D2, außerordentlich bevorzugt zwischen 0,1*D2 und D2, beträgt.

5. Vorrichtung nach einem der vorhergehenden Ansprüche, wobei die Höhe (c), die dem nicht zurückgesetzten rechteckigen unteren Abschnitt der Klinge entspricht, kleiner als 4*D2, vorzugsweise kleiner als 2*D2 und außerordentlich bevorzugt kleiner als oder gleich D2 ist.

6. Vorrichtung nach einem der Ansprüche 1 bis 5, wobei der Wirbelbrecher mindestens zwei Klingen, wobei jede Klinge von der nächsten durch einen Winkel δ getrennt ist, vorzugsweise 2 bis 8 Klingen, außerordentlich bevorzugt 2 Klingen, umfasst.

7. Vorrichtung nach einem der vorhergehenden Ansprüche, wobei jede der Klingen um eine in der Mitte der Klinge ausgebildete, in Bezug auf die Achse z symmetrische rechteckige zentrale Öffnung mit einer Breite (d) und einer Länge zurückgesetzt ist, die größer als (a) ist.

8. Vorrichtung nach einem der vorhergehenden Ansprüche, wobei das Verhältnis zwischen dem Durchmesser D1 des zylindrischen Abschnitts und dem Durchmesser D2 der Auslassleitung am Boden des kegelstumpfförmigen Abschnitts, (D1/D2), zwischen 1,1 und 1000, vorzugsweise zwischen 2 und 500 und auf bevorzugte Weise zwischen 3 und 100 beträgt.

9. Vorrichtung nach einem der vorhergehenden Ansprüche, wobei der Winkel α zwischen 10° und 70°, vorzugsweise zwischen 15° und 60° und außerordentlich bevorzugt zwischen 30° und 50° beträgt.

10. Vorrichtung nach einem der vorhergehenden Ansprüche, wobei der Winkel β gleich α ist.

11. Vorrichtung nach einem der Ansprüche 1 bis 10, wobei der Durchmesser D1 zwischen 0,1 m und 30 m, vorzugsweise zwischen 0,5 m und 20 m und außerordentlich bevorzugt zwischen 1 m und 10 m beträgt.

12. Vorrichtung nach einem der vorhergehenden Ansprüche, die weiterhin Folgendes umfasst:
- mindestens eine Einspritzung (8) von zurückgeführter und/oder Ergänzungsflüssigkeit in den kegelstumpfförmigen Abschnitt (2) der Einrichtung;
- mindestens eine Einspritzung (9) von zurückgeführter und/oder Ergänzungsflüssigkeit in den zylindrischen Abschnitt (1) der Einrichtung;
wobei die Injektion oder die Injektionen (8), die sich im kegelstumpfförmigen Abschnitt befindet bzw. befinden, in Bezug auf die Wand des kegelstumpfförmigen unteren Abschnitts um einen Winkel β1 in der vertikalen Ebene (xz) und einen Winkel β2 in der horizontalen Ebene(xy) geneigt ist bzw. sind; die Injektion oder die Injektionen (9), die sich im zylindrischen Abschnitt befindet bzw. befinden, in Bezug auf die Wand des zylindrischen oberen Abschnitts um einen Winkel θ1 in der vertikalen Ebene (xy) und einen Winkel θ2 in der horizontalen Ebene (xy) geneigt ist bzw. sind, wobei die Winkel β1 und θ1 zwischen 5° und 175° betragen, die Winkel β2 und θ2 zwischen 90° und 270° betragen.

13. Vorrichtung nach Anspruch 12, die eine Rückführleitung (7) für einen Teil der aus der Auslassleitung (5) austretenden Flüssigkeit umfasst, wobei die Rückführleitung (7) mindestens einer der Einspritzungen (8) oder (9) zurückgeführte Flüssigkeit zuführt.

14. Vorrichtung nach einem der Ansprüche 12 oder 13, die eine Ergänzungsleitung (12) umfasst, um mindestens einer der Einspritzungen (8) oder (9) Ergänzungsflüssigkeit zuzuführen.

15. Vorrichtung nach einem der Ansprüche 12 bis 14, wobei die Einspritzungen auf horizontale Schichten im kegelstumpfförmigen Abschnitt bzw. auf horizontale Schichten im zylindrischen Abschnitt verteilt sind.

16. Vorrichtung nach einem der Ansprüche 12 bis 15, wobei die Winkel βl und θ1 zwischen 10° und 150°, außerordentlich bevorzugt zwischen 15° und 120°, besonders bevorzugt zwischen 15° und 90° und noch mehr bevorzugt zwischen 20° und 60° betragen und die Winkel β2 und θ2 zwischen 90° und 180° betragen, vorzugsweise gleich 90° sind.

17. Vorrichtung nach einem der Ansprüche 12 bis 16, wobei die Höhe zwischen zwei horizontalen Schichten zwischen 0,01 m und 10 m, vorzugsweise zwischen 0,05 m und 5 m und außerordentlich bevorzugt zwischen 0,1 m und 1 m beträgt.

18. Vorrichtung nach einem der Ansprüche 15 bis 17, wobei die Zahl der Einspritzungen N pro Schicht zwischen 1 und 30, vorzugsweise zwischen 2 und 20, außerordentlich bevorzugt zwischen 2 und 10, noch mehr bevorzugt zwischen 2 und 6 beträgt, wobei die Injektionen in dieselbe Schicht um einen Winkel gleich 360/N beabstandet sind, wobei N die Zahl der Injektionen pro Schicht bezeichnet.

19. Vorrichtung nach einem der vorhergehenden Ansprüche, wobei es sich bei der Einrichtung um ein Mittel zur Gas/Flüssigkeits-Trennung handelt, das die Behandlung von Kohlenwasserstoff-Einsatzmaterialien ermöglicht.

20. Verfahren zur Umwandlung von Kohlenwasserstoff-Einsatzmaterialien, wobei eine Vorrichtung nach einem der Ansprüche 1 bis 19 verwendet wird.

21. Verfahren nach Anspruch 20, wobei die Vorrichtung weiterhin Folgendes umfasst:
- mindestens eine Einspritzung (8) von zurückgeführter und/oder Ergänzungsflüssigkeit in den kegelstumpfförmigen Abschnitt (2) der Einrichtung,
- mindestens eine Einspritzung (9) von zurückgeführter und/oder Ergänzungsflüssigkeit in den zylindrischen Abschnitt (1) der Einrichtung,
wobei die Injektion oder die Injektionen (8), die sich im kegelstumpfförmigen Abschnitt befindet bzw. befinden, in Bezug auf die Wand des kegelstumpfförmigen unteren Abschnitts um einen Winkel β1 in der vertikalen Ebene (xz) und einen Winkel β2 in der horizontalen Ebene(xy) geneigt ist bzw. sind; die Injektion oder die Injektionen (9), die sich im zylindrischen Abschnitt befindet bzw. befinden, in Bezug auf die Wand des zylindrischen oberen Abschnitts um einen Winkel θ1 in der vertikalen Ebene (xy) und einen Winkel θ2 in der horizontalen Ebene (xy) geneigt ist bzw. sind, wobei die Winkel β1 und θ1 zwischen 5° und 175° betragen, die Winkel β2 und θ2 zwischen 90° und 270° betragen, und wobei
die Geschwindigkeit V der in die Einspritzungen eingespritzten Flüssigkeit zwischen 0,05 m.s⁻¹ und 40 m.s⁻¹, vorzugsweise zwischen 0,1 m.s⁻¹ und 30 m.s⁻¹ und außerordentlich bevorzugt zwischen 0,5 m.s⁻¹ und 10 m.s⁻¹ beträgt.

22. Verfahren nach Anspruch 21, wobei die Einspritzrate von zurückgeführter und/oder Ergänzungsflüssigkeit in Bezug auf in der Einrichtung zirkulierende Kohlenwasserstoffflüssigkeit zwischen 1 % und 400 %, vorzugsweise zwischen 5 % und 100 % und außerordentlich bevorzugt zwischen 10 % und 60 % und noch mehr bevorzugt zwischen 20 und 50 % beträgt.

23. Verfahren nach einem der Ansprüche 20 bis 22, wobei ein Fließbett-Hydrokonversionsschritt für Einsatzmaterialien durchgeführt wird, die Kohlenwasserstofffraktionen enthalten, von denen mindestens 50 Gew.-% eine Siedetemperatur von mehr als 300 °C aufweisen.

## Claims

1. Device for the downflow of a hydrocarbon liquid (3) containing solid particles in the bottom of an item of equipment comprising a cylindrical upper part (1) of diameter D1, a frustoconical lower part (2) of height H and of angle of inclination α comprised between 5° and 85° with respect to the vertical axis (z) of said cylindrical upper part, and an outlet pipe (5) of diameter D2, **characterized in that** it comprises a vortex-breaker or vortex-limiting system (4), comprising at least one flat blade (13) arranged coaxial with the said outlet pipe, with symmetry of vertical axis z, comprising:
- a trapezoidal upper part of height (a) and of angle of inclination β with respect to the vertical axis (z) which is situated in the frustoconical part (2) of the column, β being strictly greater than 0 and less than or equal to α;
- and a rectangular lower part of height (b+c) and of width substantially equal to D2,
the said blade being hollowed out centrally and symmetrically with respect to the vertical axis over part of its width and over a part of its height at least equal to a.

2. Device according to Claim 1, in which the said blade is hollowed out both in the trapezoidal upper part over a height a and in the rectangular lower part over a height b.

3. Device according to one of the preceding claims, in which the height (a) of the trapezoidal upper part of the blade is comprised between 0 and 10*D2, preferably between 0.5*D2 and 5*D2, and highly preferably between 0.5*D2 and 2*D2.

4. Device according to one of the preceding claims, in which the height (b) corresponding to the hollowed-out part of the rectangular lower part of the blade is comprised between 0 and 4*D2, preferably between 0 and 2*D2, and highly preferably between 0.1*D2 and D2.

5. Device according to one of the preceding claims, in which the height (c) corresponding to the rectangular lower part of the blade which is not hollowed out is less than 4*D2, preferably less than 2*D2, and highly preferably less than or equal to D2.

6. Device according to one of Claims 1 to 5, in which the said vortex-breaker comprises at least two blades, each blade being separated from the next by an angle δ, there preferably being 2 to 8 blades, and highly preferably 2 blades.

7. Device according to one of the preceding claims, in which each of the blades is hollowed out by a rectangular central opening of width (d) and of length greater than (a), symmetric with respect to the axis z, the opening being inserted at the centre of the said blade.

8. Device according to one of the preceding claims, in which the ratio between the diameter D1 of the cylindrical part and the diameter D2 of the outlet pipe in the bottom of the frustoconical part (D1/D2) is comprised between 1.1 and 1000, preferably between 2 and 500, and for preference, between 3 and 100.

9. Device according to one of the preceding claims, in which the angle α is comprised between 10° and 70°, preferably between 15° and 60° and highly preferably between 30° and 50°.

10. Device according to one of the preceding claims, in which the angle β is equal to α.

11. Device according to one of Claims 1 to 10, in which the diameter D1 is comprised between 0.1 m and 30 m, preferably between 0.5 m and 20 m, and highly preferably between 1 m and 10 m.

12. Device according to one of the preceding claims, further comprising:
- at least one injection (8) of recirculated and/or makeup liquid into the frustoconical part (2) of the equipment;
- at least one injection (9) of recirculated and/or makeup liquid into the cylindrical part (1) of the equipment;
the said injection(s) (8) situated in the said frustoconical part being inclined with respect to the wall of the frustoconical lower part by an angle β1 in the vertical plane (xz) and by an angle β2 in the horizontal plane (xy); the said injection(s) (9) situated in the said cylindrical part being inclined with respect to the wall of the cylindrical upper part by an angle θ1 in the vertical plane (xz) and by an angle θ2 in the horizontal plane (xy), the angles β1 and θ1 being comprised between 5° and 175°, the angles β2 and θ2 being comprised between 90° and 270°.

13. Device according to Claim 12, comprising a recirculation pipe (7) for part of the liquid leaving the said outlet pipe (5), the said recirculation pipe (7) supplying at least one of the said injections (8) or (9) with recirculated liquid.

14. Device according to one of Claims 12 and 13, comprising a makeup pipe (12) for supplying at least one of the said injections (8) or (9) with makeup liquid.

15. Device according to one of Claims 12 to 14, in which the said injections are distributed in horizontal layers in the frustoconical part and in horizontal layers in the cylindrical part, respectively.

16. Device according to one of Claims 12 to 15, in which the angles β1 and θ1 are comprised between 10° and 150°, highly preferably between 15° and 120°, more preferably between 15° and 90°, and even more preferably between 20° and 60°, and the angles β2 and θ2 are comprised between 90° and 180°, preferably equal to 90°.

17. Device according to one of Claims 12 to 16, in which the height between two horizontal layers is comprised between 0.01 m and 10 m, preferably between 0.05 m and 5 m, and highly preferably between 0.1 m and 1 m.

18. Device according to one of Claims 15 to 17, in which the number N of injections per layer is comprised between 1 and 30, preferably between 2 and 20, highly preferably between 2 and 10, more preferably still between 2 and 6, the said injections within the one same layer being spaced by an angle equal to 360/N where N denotes the number of injections per layer.

19. Device according to one of the preceding claims, in which the said equipment is a gas/liquid separation means capable of processing hydrocarbon feedstocks.

20. Method for converting hydrocarbon feedstocks implementing a device according to one of Claims 1 to 19.

21. Method according to Claim 20, in which the device further comprises:
- at least one injection (8) of recirculated and/or makeup liquid into the frustoconical part (2) of the equipment;
- at least one injection (9) of recirculated and/or makeup liquid into the cylindrical part (1) of the equipment;
the said injection(s) (8) situated in the said frustoconical part being inclined with respect to the wall of the frustoconical lower part by an angle β1 in the vertical plane (xz) and by an angle β2 in the horizontal plane (xy); the said injection(s) (9) situated in the said cylindrical part being inclined with respect to the wall of the cylindrical upper part by an angle θ1 in the vertical plane (xz) and by an angle θ2 in the horizontal plane (xy), the angles β1 and θ1 being comprised between 5° and 175°, the angles β2 and θ2 being comprised between 90° and 270°, and in which
the velocity V of the liquid injected in the said injections is comprised between 0.05 m.s⁻¹ and 40 m.s⁻¹, preferably between 0.1 m.s⁻¹ and 30 m.s⁻¹ and highly preferably between 0.5 m.s⁻¹ and 10 m.s⁻¹.

22. Method according to Claim 21, in which the level of recirculated and/or of makeup liquid injected with respect to the hydrocarbon liquid circulating through the equipment is comprised between 1% and 400%, preferably between 5% and 100%, highly preferably between 10% and 60%, and more preferably still between 20 and 50%.

23. Method according to one of Claims 20 to 22, employing an ebullated-bed hydroconversion step for feedstocks containing hydrocarbon fractions of which at least 50 wt% have a boiling point above 300°C.
